# EUROPEAN PATENT SPECIFICATION

(11) **EP 2 583 436 B1**
(45) Date of publication and mention of the grant of the patent: **05.03.2014**
(21) Application number: 10773726.4
(22) Date of filing: 21.06.2010
(51) Int. Cl.: H04L 12/14, H04L 29/08

(54) **METHOD AND APPARATUS FOR HANDLING TIME ZONE INFORMATION IN AN INTERNET PROTOCOL MULTIMEDIA SUBSYSTEM, IMS, NETWORK**
VERFAHREN UND VORRICHTUNG ZUR HANDHABUNG VON ZEITZONENINFORMATIONEN IN EINEM IP-MULTIMEDIA-SUBSYSTEMNETZWERK, IMS, NETZWERK
PROCÉDÉ ET APPAREIL POUR GÉRER DES INFORMATIONS DE FUSEAUX HORAIRES DANS UN RÉSEAU DE SOUS-SYSTÈME MULTIMÉDIA DE PROTOCOLE INTERNET, IMS

(43) Date of publication of application: 24.04.2013
(73) Proprietor: Telefonaktiebolaget L M Ericsson (publ), 164 83 Stockholm (SE)
(72) Inventor: GUERRA, Ruth, S-113 38 Stockholm (SE); DAHL, Jan, S-125 56 Älvsjö (SE); LINDGREN, Hans, S-125 43 Älvsjö (SE); ANDERSSON, Hans, S-122 41 Enskede (SE)
(74) Representative: Sjöberg, Mats Hakan
(86) International application number: PCT/SE2010/050701
(87) International publication number: WO 2011/162644

(56) References cited:
- WO-A1-2010/066472
- US-A1- 2008 305 811
- "3rd Generation Partnership Project; Technical Specification Group Services and System Aspects; IP Multimedia Subsystem (IMS); Stage 2 (Release 10)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 10 June 2010 (2010-06-10), pages 1-267, XP050441557, [retrieved on 2010-06-10]
- "3rd Generation Partnership Project; Technical Specification Group Services and System Aspects; Overall high level functionality and architecture impacts of flow based charging; Stage 2 (Release 7)", 3GPP STANDARD; 3GPP TS 23.125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.0.0, 1 June 2007 (2007-06-01), pages 1-49, XP050362768,

## Description

### TECHNICAL FIELD

The present invention relates to methods and apparatuses for handling time zone information in a telecommunications system and in particular to methods and apparatuses for transporting and using time zone information in an Internet protocol Multimedia Subsystem (IMS) network.

### BACKGROUND

With the emergence of new technologies for mobile telephony, packet-based communication solutions using Internet Protocol (IP) have been developed to support the usage of multimedia services, while different mobile and fixed user terminals with new functionalities for multimedia communication are emerging on the market. Services are also constantly being developed for terminal users to increase the field of usage and enhance the experience when generally consuming communication services.

An Internet protocol Multimedia Subsystem (IMS) network can be used for enabling multimedia services and other communication services by initiating and controlling sessions for user terminals connected to various different access networks. The sessions are handled by specific session control nodes in the IMS network, including those referred to as Call Session Control Function (CSCF) nodes.

The signaling protocol Session Initiation Protocol (SIP) is used for multimedia sessions in IMS networks and other communication services networks.

A time zone is a region of the earth that has uniform standard time, usually referred to as the local time. By convention, time zones compute their local time as an offset from UTC. Local time is UTC plus the current time zone offset for the considered location.

Time zones are divided into standard and daylight saving. Daylight saving time zones include an offset (+1 or +2) for daylight saving time.

Standard time zones can be defined by geometrically subdividing the Earth's spheroid into 24 lunes (wedge-shaped sections), bordered by meridians each 15° of longitude apart. The local time in neighboring zones would differ by one hour. However, political boundaries, geographical practicalities, and convenience of inhabitants can result in irregularly-shaped zones. Moreover, in a few regions, half-hour or quarter-hour differences are in effect.

Until fairly recently, time zones were based on Greenwich Mean Time (GMT, also called UT1), the mean solar time at longitude 0° (the Prime Meridian). But as a mean solar time, GMT is defined by the rotation of the Earth, which is not constant in rate. So, the rate of atomic clocks was annually changed, or steered, to closely match GMT. In January 1972, however, atomic clock rates were fixed and predefined leap seconds replaced rate changes. This new time system is called Coordinated Universal Time (UTC). Leap seconds are inserted to keep UTC within 0.9 seconds of UT1. In this way, local times continue to correspond approximately to mean solar time, while the effects of variations in Earth's rotation rate are confined to simple step changes that can be more easily applied to obtain a uniform time scale (International Atomic Time or TAI). With the implementation of UTC, nations began to use it in the definition of their time zones instead of GMT. As of 2005, most but not all nations had altered the definition of local time in this way (though many media outlets fail to make a distinction between GMT and UTC). Further change to the basis of time zones may occur if proposals to abandon leap seconds succeed.

The time kept in an IMS system is UTC, wherever the system is deployed. Therefore IMS is time zone agnostic.

However, an IMS system can be deployed covering remote areas that might have different time zones. As the IMS system uses UTC only, there are no mechanisms defined in any IMS standard how to handle or transport information relating to a time zone. However, there are situations when it would be desirable to be able to take time zone information into account in IMS.

It is for instance of interest to be able to base certain types of end-user services on a time zone of the end-user rather than on UTC. An example of one such service is Communication Diversion that allows a user to e.g. divert calls to a different destination at selected time intervals.

Another example of a situation in which it would be of interest to take time zone information into account is charging. By means of time-based tariffs it is possible for an operator to e.g. set higher rates at busy hours when the network load is high and lower rates when the network load is low such as at night time. But the busy hours will be different for different time zones and locations, and users and terminals may be mobile and able connect to networks in different time zones.

A time zone setting could be controlled by the end user for service triggering purposes, but for charging, the time zone setting needs to be accurate and trustworthy to prevent fraud if charging is to be based on time of the day.

US20080305811 discloses IMS networks and methods for storing information on the access network of a user in a subscriber profile for the user. When a communication device of a user attempts to register with an IMS network, a P-CSCF receives a register request message from the communication device, and identifies access network information for the user. The P-CSCF then transmits another register request message to an S-CSCF that includes the access network information, and the S-CSCF in turn forwards the access network information to an HSS. The HSS then stores the access network information in the subscriber profile for the user. Nodes in the IMS network that retrieve the subscriber profile may acquire the access network information to provide services based on the access network information.

### SUMMARY

It is an object of the invention to provide methods and apparatuses for reliable handling of time zone information in an Internet protocol Multimedia Subsystem (IMS) network, which make it possible to e.g. take the time zone information into account in services and charging.

This object and others may be obtained by using methods and apparatuses according to the attached independent claims.

According to different aspects, methods and apparatuses are provided for transporting and using time zone information in an IMS network.

According to one aspect, a method in a call session control function (CSCF) node is provided for handling time zone information in an IMS network. In response to receiving a request message related to a user equipment (UE), the CSCF node retrieves time zone information. The time zone information specifies a time zone associated with the UE. The CSCF node stores the time zone information in a memory unit of the CSCF node and sends at least one message, including the time zone information to at least one other IMS network node. In this way the at least one other IMS network node is able to support time zone based services and/or charging associated with the UE.

Furthermore, a CSCF node is provided for handling time zone information in an IMS network. The CSCF node comprises a receiver, a transmitter, a memory unit and processing logic. The processing logic is connected to the receiver, to the transmitter and to the memory unit. The receiver is configured to receive a request message related to a UE. The processing logic comprises retrieving logic, which is configured to retrieve time zone information in response to reception of the request message. The time zone information specifies a time zone associated with the UE. The processing logic is further configured to store the time zone information in the memory unit of the CSCF node. The transmitter is configured to send at least one message, including the time zone information, to at least one other IMS network node. In this way the at least one other IMS network node is able to support time zone based services and/or charging associated with the UE.

According to another aspect, a method in a home subscriber server (HSS) node is provided for handling time zone information in an IMS network. The HSS node receives a request message related to a registration of a UE in the IMS network. The request message is received from a serving CSCF (S-CSCF) node. The HSS node requests time zone information that specifies a time zone associated with the UE. The time zone information is requested from a mobile packet core network associated with a mobile access network to which the UE is connected. The HSS receives the requested information and stores the time zone information in a memory unit of the HSS node. The HSS node sends a response message, including the time zone information, to the S-CSCF node. In this way the S-CSCF node is able to support time zone based services and/or charging associated with the UE.

Furthermore, an HSS node is provided for handling time zone information in an IMS network. The HSS node comprises a receiver, a transmitter, a memory unit and processing logic. The processing logic is connected to the receiver, to the transmitter and to the memory unit. The receiver is configured to receive a request message from an S-CSCF node. The request message is related to a registration of a UE in the IMS network. The processing logic comprises requesting logic, which is configured to request time zone information that specifies a time zone associated with the UE. The time zone information is requested from a mobile packet core network associated with a mobile access network to which the UE is connected. The receiver is further configured to receive the requested time zone information and store the time zone information in the memory unit (450) of the HSS node. The transmitter is configured to send a response message, including the time zone information, to the S-CSCF node. In this way the S-CSCF node is able to support time zone based services and/or charging associated with the UE.

An advantage with embodiments of the invention is that time zone setting is controlled by the network which ensures trusted creation and transport of time zone information, which prevents fraud by the end-user.

A further advantage with embodiments of the invention is that it is possible to effectively spread time zone information among IMS network nodes, thus allowing the nodes to use the time zone information, e.g. in service decisions or for charging. Accordingly, the nodes do not need to request time zone information, every time such information is needed.

An advantage with certain embodiments of the invention is that it is possible to take into account the time zone of the user's current location.

An advantage with certain embodiments of the invention is that it is possible to take into account the time zone of the user's home location,

An advantage with certain embodiments of the invention is that changes of the time zone information is handled through updates of the user data and is thus handled via existing mechanisms.

An advantage with certain embodiments of the invention is that it is possible for IMS network nodes to execute time based services using the time zone of the end user's current location or the time zone of the end user's home location.

An advantage with certain embodiments of the invention is that it is possible for IMS network nodes to support charging models where the cost for the service is based on the time zone of the end user's current location or the time zone of the end user's home location.

Further features of the invention and its benefits will become apparent from the detailed description below.

### BRIEF DESCRIPTION OF THE DRAWINGS

The invention will now be described in more detail by means of exemplary embodiments and with reference to the accompanying drawings, in which:
Figure 1 is a block diagram schematically illustrating a telecommunications system in which embodiments of the invention may be implemented;
Figure 2 is a signaling diagram schematically illustrating handling of time zone information in an Internet protocol Multimedia Subsystem (IMS) network, in accordance with an embodiment of the invention;
Figure 3 is a block diagram schematically illustrating a Call Session Control Function (CSCF) node, in accordance with an embodiment of the invention;
Figure 4 is a block diagram schematically illustrating a Home Subscriber Server (HSS) node, in accordance with an embodiment of the invention;
Figure 5 is a flow chart schematically illustrating a method for handling time zone information in an IMS network, in accordance with an embodiment of the invention;
Figure 6 is a flow chart schematically illustrating a method for handling time zone information in an IMS network, in accordance with an embodiment of the invention;
Figures 7a and 7b are signaling diagrams schematically illustrating handling of time zone information in accordance with alternative embodiments of the invention in a situation of mobile access;
Figures 8a-d are block diagrams schematically illustrating handling of time zone information in accordance with alternative embodiments of the invention in a situation of fixed access.
Figures 9a and 9b are signaling diagrams schematically illustrating handling of time zone information in accordance with embodiments of the invention in case of an originating and a terminating request respectively;
Figure 10 is a block diagram schematically illustrating an Attribute-Value-Pair (AVP) populated with time zone information in accordance with an embodiment of the invention; and
Figure 11 is a block diagram schematically illustrating a P-Charging-Vector (PCV) header populated with time zone information in accordance with an embodiment of the invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

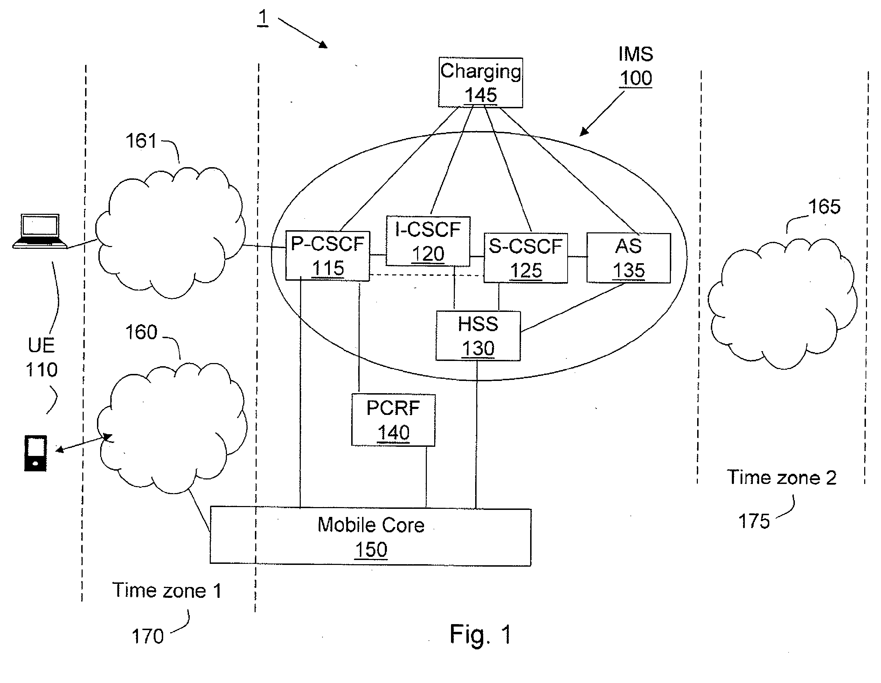

Figure 1 illustrates a telecommunications system 1 in which embodiments of the present invention may be implemented. The telecommunications system 1 includes an Internet protocol Multimedia Subsystem (IMS) network 100 serving users of mobile or fixed terminals, hereinafter referred to as user equipment (UE) 110. A UE 110 will connect to the IMS network 100 via an access network. In Fig. 1 three access networks 160, 161 and 165 are illustrated but there may be more or less access networks communicating with the IMS network 100 as will be appreciated by a person skilled in the art. The UE 110 may connect to the IMS network 100 via a fixed access network 161; or via a mobile access network 160, which in turn is connected to a mobile packet core network 150, hereinafter referred to as Mobile Core 150.

It is to be noted that in the case of roaming, the UE 110 may be connected to a visited mobile access network (not shown), which in turn is connected to a first Mobile Core (not shown). The first Mobile Core may then communicate with a second Mobile Core in a home network (not shown) of the UE 110. Then second Mobile Core may be connected to the IMS network 100, such that the visited mobile access network communicates with the IMS network 100 via the first Mobile Core and the second Mobile Core. For the sake of simplicity only one Mobile Core 150 is shown in Fig. 1 and the Mobile Core 150 is hereinafter referred to as being associated with the mobile access network 160, even though the mobile access network 160 may be directly or indirectly connected to the Mobile Core 150.

The IMS network 100 comprises various session control nodes, referred to as Call Session Control Function (CSCF) nodes. These CSCF nodes include a proxy call session control function (P-CSCF) node 115 providing a point of contact for users in the IMS network 100, a serving call session control function (S-CSCF) node 125 controlling various sessions for users, and an interrogating call session control function node (I-CSCF) 120 providing an interface towards other, not shown, IMS networks and which also queries a subscriber database node, hereinafter referred to as a home subscriber server (HSS) node 130, for user related information during user registration and termination. The HSS 130 stores subscriber and authentication data which can be retrieved by other nodes for serving and handling different users.

The IMS network 100 also comprises a plurality of application server (AS) nodes configured to provide different communication services when invoked to meet service requests for clients. For the sake of simplicity only one AS node 135 is shown in Figure 1. Each AS 135 may be configured to provide a specific service or a particular set of services. AS 135 is linked to session control signaling over an interface to the S-CSCF node 125. According to a 3rd Generation Partnership Project (3GPP) architecture such interface is referred to as an ISC interface.

The depicted CSCFs 115, 120, 125 and the AS 135 are examples of IMS nodes that generally support charging by providing charging information related to sessions, which the nodes are involved in respectively, to a Charging Control System. In Fig. 1 only a single charging node 145 of a Charging Control System is illustrated for simplicity. An IMS node capable of supporting charging comprises a Charging Triggering Function, (CTF) (not shown). A CTF is adapted to generate charging information for a service/event and to send that information to the Charging Control System. This information can then be used, for example, when billing the user or at inter-operator settlements. There are also other, not shown, nodes that may support charging according to the 3GPP architecture, such as a Media Resource Function Controller (MRFC), Media Gateway Control Function (MGCF), a Border Gateway Control Function (BGCF) and a Interconnection Border Control Function (IBCF).

A policy control and charging rules function (PCRF) node 140 interacts with the IMS network 100 and the Mobile Core 150. The PCRF node 140 encompasses i.a. policy control decision and flow based charging control functionalities.

In Fig. 1 two different time zones are illustrated, Time zone 1 170 and Time zone 2 175. In the exemplary scenario illustrated in Fig. 1 it is assumed that the mobile access network 160 and the fixed access network 161 are in the time zone 170, while the access network 165, which may be mobile or fixed, is in the time zone 175.

Let us assume that a user of the UE 110 lives in the time zone 175. When physically at home the user can connect to the IMS network 100 via the access network 165, which may be operated by an operator with which the user has a subscription. But it is also possible for the user to connect to the IMS network from a remote place e.g. via the access network 160 or 161, which may be operated by the same or different operator(s) than the one of the user's subscription. Knowing the local time where the user actually is allows the operator to use the current local time e.g. when applying time-based tariffs. According to prior art the Charging Control System can possibly take into consideration the time zone of the home address of the user if configured so, but it will not know where the end user physically was when the service was used.

Briefly described, embodiments of the present invention provide a solution for handling time zone information in an IMS network, enabling an effective way for IMS network nodes to support time zone based services and/or charging. Embodiments of the invention provide mechanisms to reliably get the local time of the end user as well as mechanisms for transporting the time zone information such that it is readily available and updated when needed.

According to embodiments of the invention time zone information is added to signaling between IMS nodes, e.g. in an appropriate SIP signaling header, and spread to all nodes involved. Thus all nodes that have received the time zone information may use the time zone information, e.g. in service decisions, or include it in charging information to improve the input e.g. to rating decisions and statistics.

An example of a possible carrier of the time zone information is the P-Charging-Vector header (PCV), although any suitable SIP signaling header may be used.

The time zone information can be included in the charging information by all IMS nodes, capable of charging, that have received and stored the time zone information. The time zone information is included in an Attribute-Value-Pair (AVP), which is created by the IMS node capable of charging. The AVP is included in a charging message sent to the charging node 145.

According to certain embodiments of the invention two different types of time zone information are used. The first type of time zone information represents the local time where the UE 110 is, i.e. the time zone of the UE's 110 current location, hereinafter referred to as User Current Time Zone (UCTZ). The second type of time zone information represents the local time of the end user's home address, i.e. the time zone associated with a user subscription associated with the UE 110, hereinafter referred to as User Home Time Zone (UHTZ).

However, even though it may be beneficial to use two different types of time zone information the present invention is not limited to this. It is for instance possible according to embodiments of the present invention to only signal time zone information related to the current time zone of the user, UCTZ, between IMS nodes and, if needed, derive the home time zone information of the user, UHTZ, from UTC and stored information about the user's home address.

The UCTZ and UHTZ may be expressed in a time zone offset with a daylight saving time indication.

It will now be discussed more in detail how the time zone information, UCTZ and UHTZ, is created and transported in the IMS network 100.

According to certain embodiments the UCTZ is retrieved from the Mobile Core 150 and is then included in the SIP signaling by the node that retrieved the UCTZ. Thus, the Mobile Core 150 is the source of the UCTZ, based on the Mobile Core 150 knowledge about the UE's 110 location in the access network.

According to alternative embodiments when the UE 110 connects to the IMS network 100 via a mobile access network 160; either the P-CSCF 115 retrieves the UCTZ from the Mobile Core 150 via the PCRF 140, or the S-CSCF 125 retrieves the UCTZ from the Mobile Core 150 via the HSS 130.

According to alternative embodiments when the UE 110 connects to the IMS network 100 via a fixed access network 161, the UCTZ is, e.g. per Virtual Local Area Network (VLAN), Local Area Network (LAN) or IP subnet, configured within the IMS network 100, i.e. in the P-CSCF 115. The P-CSCF 115 thus retrieves the UCTZ from configuration information.

According to certain embodiments of the invention the UHTZ is provisioned in the HSS 130 for each end user and included in the user data. The S-CSCF 125 retrieves the UHTZ, from the HSS 130, at registration, as part of the end user profile, and includes the UHTZ in the SIP signaling.

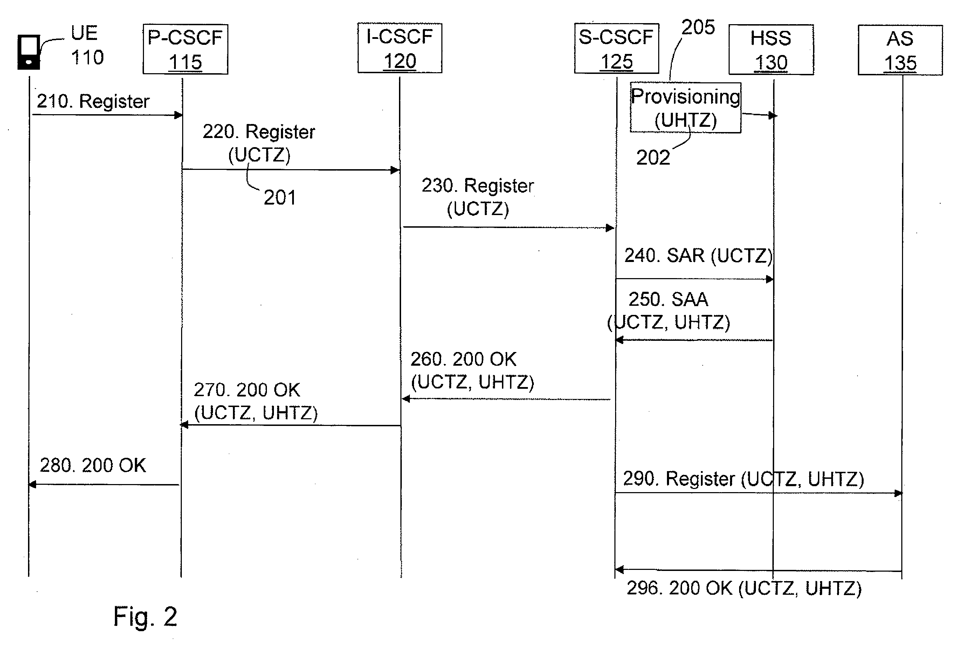

A procedure for handling time zone information in an IMS network 100, in connection with registration of an UE 110, in accordance with an exemplary embodiment of the invention, will now be described with reference to the signaling diagram shown in Figure 2. Signals and steps indicated by reference numerals 205-296 respectively in Fig. 2 are explained below.
210 The UE 110 sends a registration request message to the P-CSCF 115.

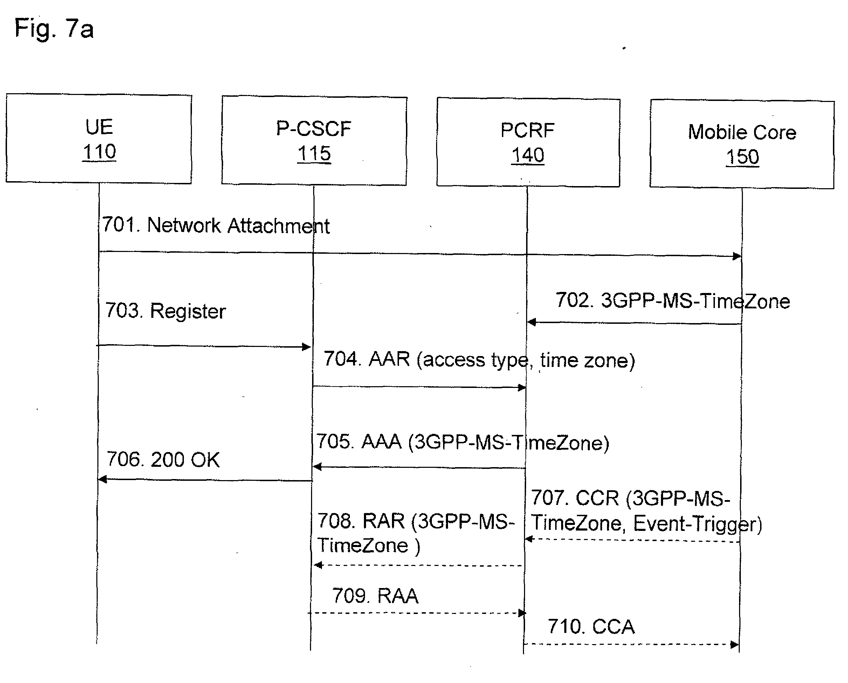

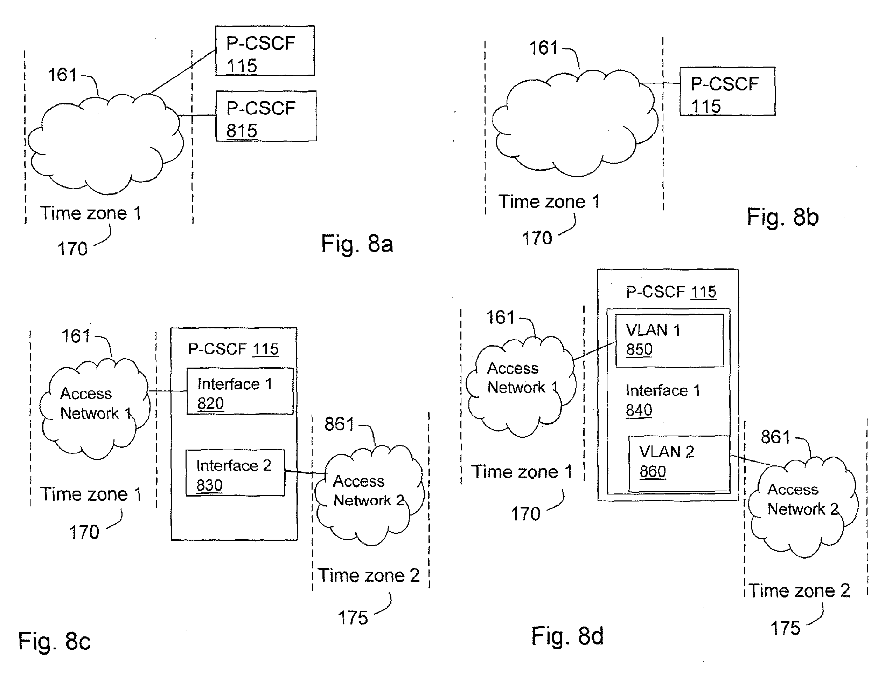

The P-CSCF 115 receives the registration request message, and will then retrieve and store the time zone information related to the UE 110. In this exemplary embodiment the time zone information is UCTZ 201. Alternatives for the P-CSCF 115 to retrieve the UCTZ 201 will be discussed later in connection with Figures 7a and 8a-d.

According to alternative embodiments it is also possible that the P-CSCF 115 does not retrieve and store the UCTZ 201 in response to reception of the registration request message sent in the step 210, as will be explained further below.
220 The P-CSCF 115 adds if known (i.e. if retrieved and stored in the previous step) the retrieved UCTZ 201 to the SIP signaling, by including the UCTZ 201 in the registration request message, e.g. in the PCV header 102. The P-CSCF 115 then forwards the registration request message to the I-CSCF 120.

In alternative embodiments when the UCTZ 201 is not known by the P-CSCF 115, the registration request message will be forwarded without any UCTZ 201 added.
230 The I-CSCF 120 stores the UCTZ 201, if received. The I-CSCF 120 then finds the S-CSCF 125 according to standard procedures and forwards the registration request message, including the UCTZ 201.

In the alternative embodiments when the UCTZ 201 is not received and stored by the I-CSCF 120, the registration request message will be forwarded without any UCTZ 201 included.
240 The S-CSCF 125 receives the registration request message and retrieves the UCTZ 201 from the registration request message, if any UCTZ 201 is present. S-CSCF 125 stores the UCTZ 201, together with an indication that the P-CSCF 115 is the source of the information (i.e. the P-CSCF 115 did retrieve and store the UCTZ 201 in connection with step 210). The S-CSCF 125 then initializes the registration process with the HSS 130, by sending a request message to the HSS 130, including the UCTZ 201, if received.

In this example the request message is a Server Assignment Request, SAR.

In the alternative embodiments when the UCTZ 201 is not received and stored by the S-CSCF 125, the request message will be sent without any UCTZ 201 added.

It is to be noted that the HSS 130, according to present standards, is not an IMS network node that support charging, nor does it provide services. The reason to include time zone information (in this example UCTZ 201) in the request message (SAR) sent to the HSS 130, is that the HSS 130 then would be able to store the time zone information and make it available for application servers, such as the AS 135, to download the time zone information over the Sh interface, i.e. the interface between the HSS 130 and the AS 135. However, if the HSS 130 is the source of the UCTZ 201 it shall ignore any UCTZ 201 received from S-CSCF 125.
250 The HSS 130 sends a response message to the S-CSCF 125 including user data when the registration is authorized. In this example the response message is a Server Assignment Answer, SAA. Time zone information related to the UE 110 will be included in the response message.

In this exemplary embodiment the time zone information includes UHTZ 202 and may also include UCTZ 201, which will be further explained below. UHTZ 202 is preconfigured (or provisioned) into the HSS 130 and included in the user data stored in the HSS, which is illustrated as step 205 in Fig. 2.

In the case when the UCTZ 201 was forwarded by the S-CSCF 125 to the HSS 130 in the previous step, i.e. when the S-CSCF is the source of the UCTZ 201, it is not necessary for the HSS 130 to include the UCTZ 201 in the response message sent to the S-CSCF 125. In this case the S-CSCF 125 has already received and stored the UCTZ 201 in the previous step.

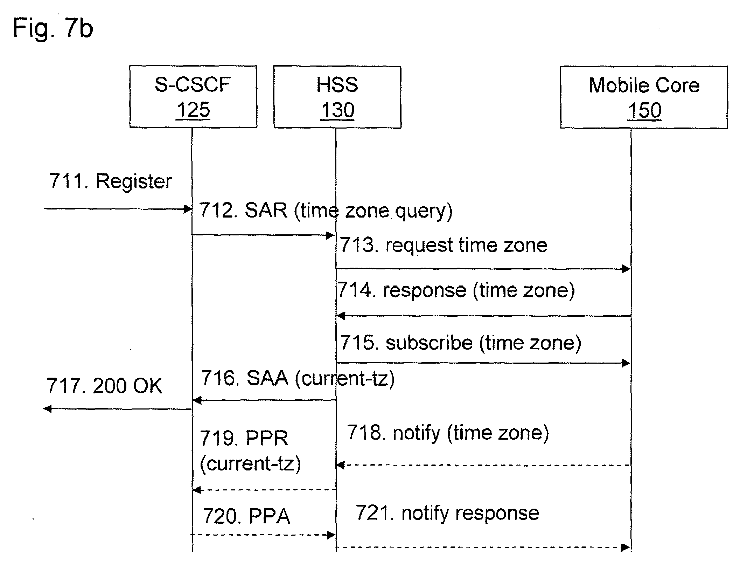

In the case when the UCTZ 201 was not forwarded by the S-CSCF 125 to the HSS 130 in the previous step, the UCTZ 201 may instead be retrieved by the HSS 130 from the Mobile Core 150, and then the UCTZ 201, retrieved by the HSS 130, may be included into the response message sent to the S-CSCF 125. How the HSS 130 retrieves the UCTZ 201 from the Mobile Core 150 will be further discussed in connection with Figure 7b.
260 The S-CSCF 125 stores the user data received in the response message sent from HSS 130 including the UHTZ 202. If the UCTZ 201 is received from the HSS 130, the S-CSCF 125 checks if the P-CSCF 115 already has been marked as the source of the UCTZ 201. If it has, then the UCTZ 201 received from the HSS 130 is not stored by the S-CSCF 125. Otherwise the UCTZ 201 received from the HSS 130 is stored by the S-CSCF 125, and the HSS 130 is marked as the source of the UCTZ 201.

S-CSCF 125 then sends the response message back towards the UE 110 with the time zone information related to the UE 110 included. In this example the response message is a 200 OK message.

In this exemplary embodiment the time zone information is the UCTZ 201 and the UHTZ 202. As earlier the discussed the UCTZ 201 is either retrieved by the P-CSCF 115 in step 210 or retrieved by the HSS 130 in step 250.
270 The I-CSCF 120 forwards the response message to the P-CSCF 115. The I-CSCF 120 stores the UCTZ 201, if not already stored as discussed in connection with step 230. The I-CSCF 120 stores the UHTZ 202.
280 The P-CSCF 115 receives the response message and stores the UHTZ 202. The P-CSCF 115 also stores the UCTZ 201, if not already stored as discussed in connection with step 210. Thus the P-CSCF 115 will store the UCTZ 201 only when the HSS 130 is the source of the information. The P-CSCF 115 then forwards the response message to the UE 110. The P-CSCF 115 removes any time zone information from the response message before it is forwarded to the UE 110. Alternatively the response message is forwarded to the UE 110 with the time zone information included if such information is useful for the UE 110 depending on the application scenario. However, the normal case is that the PCV header 102 is not forwarded to the UE 110, therefore no time zone information is included in the response message illustrated in step 280 of Fig. 2.

In the exemplary embodiment illustrated in Fig. 2 the time zone information is UCTZ 201 and UHTZ 202.
290 If an AS 135 is configured to receive registration status, the S-CSCF 125 then forwards the register request message, including the time zone information, to the AS 135. In this exemplary embodiment the time zone information is UCTZ 201 and UHTZ 202.
296 The AS 135 stores the received UCTZ 201 and UHTZ 202 and responds with a response message. In this example the response message is a 200 OK message.

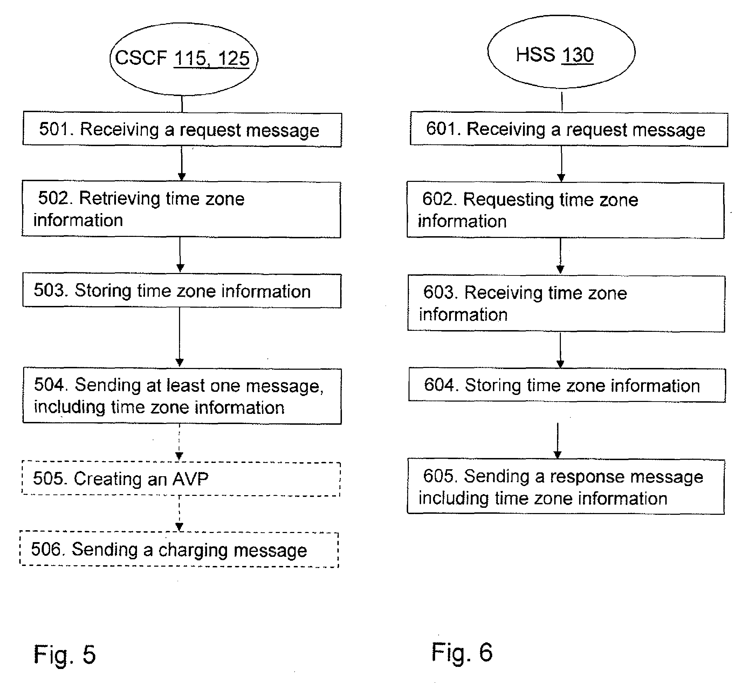

All involved nodes that also act as CTF may include the available time zone information in the charging data, which will be described in connection with Figure 5.

In the exemplary embodiment described above in connection with Figure 2 the time zone information is described as UCTZ 201 and/or UHTZ 202. In alternative, not shown, embodiments, it is however possible that e.g. the UHTZ 202 is not used at all, which would require modification of some of the steps accordingly.

As discussed above the UCTZ 201 is, according to certain embodiments, retrieved from the Mobile Core 150, and is then included in the SIP signaling by the node that retrieved the UCTZ 201. Alternative embodiments for the retrieval of the UCTZ 201 when the UE 110 connects to the IMS network 100 via a mobile access network 160, will now be discussed more in detail in connection with Figures 7a and 7b.

The descriptions of the embodiments related to the mobile access refers to the 3GPP Global System for Mobile Communications (GSM) and Wideband Code Division Multiple Access (WCDMA) architecture, but the same principles can be used for solving time zone handling for other accesses, e.g. Long Term Evolution (LTE).

The exemplary embodiment illustrated in Fig. 7a describes one alternative for the P-CSCF 115 to retrieve time zone information in a case when the UE 110 connects to the IMS network 100 via the mobile access network 160. In this exemplary embodiment the time zone information is related to the time zone where the UE 110 resides, i.e. the time zone information comprises UCTZ 201 or an indication of the UCTZ 201.

Signals and steps indicated by reference numerals 701-710 respectively in Fig. 7a are now explained below.
701 The UE 110 requests network attachment to the Mobile Core 150, according to standard procedures.
702 The Mobile Core 150 sends a request message to inform the PCRF 140 of the user's access type information according to standard procedures and also includes the current time zone information in this user's access type information according to this embodiment of the invention. In this example the request message is a Credit Control Request (CCR) message and the time zone information is carried in a 3GPP-MS-TimeZone AVP.
703 The UE 110 sends a register request message to the IMS network 100, i.e. to the P-CSCF 115. (This step corresponds to step 210 in Fig. 2.)
704 The P-CSCF 115 requests the access type related to the UE 110 from the PCRF 140 with a request message. In this example the request message is an Authentication Authorization Request (AAR) message. The P-CSCF 115 then retrieves the time zone information by indicating in the request message that time zone information is requested. One way of indicating this is to use a Supported-Feature AVP for this purpose.
705 The PCRF 140 sends the requested time zone information, in a response message to the P-CSCF 115. In this example the response message is an Authentication Authorization Answer (AAA) and the time zone information is carried in a 3GPP-MS-TimeZone AVP. The PCRF 140 stores the particular P-CSCF 115 node that has requested the time zone information for the UE 110 as a subscriber for the time zone information. The PCRF 140 will use the subscription information and thereby inform the P-CSCF 115 about future updates, which will be described more in detail below.

The P-CSCF 115 stores the received time zone information, which corresponds to the UCTZ 201, which will be explained more in detail below.
706 The P-CSCF 115 sends a response message, which in this example is a 200 OK message, to the UE 110.

Comparing with Fig. 2, after completion of the step 705 in Fig. 7a, the P-CSCF 115 has the time zone information, i.e. the UCTZ 201, and may now be able to include the time zone information in step 220 illustrated in Fig. 2.

The 3GPP-MS-TimeZone AVP (specified in 3GPP TS 29.061) that carries the time zone information sent by the Mobile Core 150 indicates an offset (in steps of 15 minutes) between UTC and the local time zone where the UE 110 currently resides. The 3GPP-MS-TimeZone AVP also contains an indication whether Daylight Saving Time is applied or not, and if so, whether the time has been adjusted +1 or +2 hours. Thus, the 3GPP-MS-TimeZone AVP corresponds to the UCTZ 201.

According to alternative embodiments the PCRF 140 subscribes to changes of the UE's 110 current time zone by sending a message (not shown) to the Mobile Core 150 including an Event-Trigger AVP with a value requesting an indication when the time zone changes.

As soon as the Mobile Core 150 identifies a change to the current time zone of the UE 110, it will notify the PCRF 140 about the change. The PCRF 140 will then in turn send a message to the P-CSCF 115 to update the time zone information. This updating procedure will now be described in steps 707-710.
707 When the UE's 110 current time zone changes, the Mobile Core 150 sends a message, to the PCRF 140, including an indication that the time zone has changed and the new time zone. In this example the message is a Credit Control Request (CCR).
708 The PCRF 140 sends a message, to inform the P-CSCF 115 that the user's current time zone has changed. The P-CSCF 115 stores the new time zone information, i.e. the updated UCTZ 201. In this example the message is a Re Authorization Request (RAR).
709 The P-CSCF 115 sends a response message, which in this example is a Re Authorization Answer (RAA), to confirm reception of the message received in step 708.
710 The PCRF 140 sends a response message, which in this example is a Credit Control Answer (CCA), to confirm reception of the message received in step 707.

The exemplary embodiment illustrated in Fig. 7b describes one alternative for the S-CSCF 125 to retrieve time zone information 201 in a case when the UE 110 connects to the IMS network 100 via the mobile access network 160. In this exemplary embodiment the time zone information comprises the UCTZ 201.

Signals and steps indicated by reference numerals 711-721 respectively in Fig. 7b are explained below.
711 The S-CSCF 125 receives a registration request message. (Corresponds to step 230 in Fig. 2, but in this case time zone information is not present in the registration request message.)
712 The S-CSCF 125 initializes the registration process against the HSS 130 with a request message. In this example the request message is a Server Assignment Request (SAR). The S-CSCF 125 then retrieves time zone information by indicating in the request message that time zone information is requested. One way of indicating this is to use the Supported-Feature AVP for this purpose.
713 In case of initial registration of the UE 110, the HSS 130 requests the time zone from the Mobile Core 150, otherwise the process continues at step 716.
714 The Mobile Core 150 responds with the current time zone of the UE 110, which corresponds to the UCTZ 201.
715 The HSS 130 stores the time zone information, i.e. UCTZ 201 and initiates a subscription to such time zone information.
716 The HSS 130 sends the user data including the time zone information, i.e. UCTZ 201 in a response message. In this example the response message is a Server Assignment Answer (SAA).
717 The S-CSCF 125 stores the user data including the time zone information, i.e. UCTZ 201, and sends a response message, which in this example is a 200 OK message, with UCTZ 201 towards the UE 110.

According to alternative embodiments the HSS 130 subscribes to changes of the UE's 110 current time zone, e.g. by including a subscription for changes in step 715 or by sending a message (not shown) to the Mobile Core 150.

As soon as the Mobile Core 150 identifies a change to the current time zone of the UE 110, it will notify the HSS 130 about the change. The HSS 130 will then in turn update the information in the extension of the service profile and send a message to the S-CSCF 125 to update the time zone information. This updating procedure will now be described in steps 718-721.
718 When the user's current time zone changes, the Mobile Core 150 notifies the HSS 130 about the new time zone.
719 The HSS stores the new time zone information and sends a message, which in this example is a Push Profile Request (PPR) message, to inform the S-CSCF 125 that the user's current time zone has changed. The S-CSCF 125 stores the new time zone information, i.e. the updated UCTZ 201.
720 The S-CSCF 125 sends a response message, which in this example is a Push Profile Answer (PPA), to confirm reception of the message received in step 719.
721 The HSS 130 responds to the notification with a response message, to confirm reception of the notification received in step 718.

An alternative procedure for handling time zone information, i.e. for the retrieval of the UCTZ 201, in accordance with alternative embodiments of the invention in a situation of fixed access, will now be described with reference to the block diagrams shown in Figures 8a-d.

These embodiments describe alternatives for the time zone information to be preconfigured in the P-CSCF 115 in the case when the UE 110 connects to the IMS network 100 via the fixed access network 161. In this exemplary embodiment the time zone information is related to the time zone where the UE 110 resides, i.e. the time zone information corresponds to UCTZ 201.

Fixed access will not require any specific support from the access network. The assumption is that one access network only covers a single time zone. This is a fair assumption because if a physical access network covers more than one time zone, VLAN's covering a single time zone each, may be created and used. Therefore, when referring to a fixed access network below, the fixed access network may be a physical access network or a VLAN that is a part of a physical access network. The time zone information is preconfigured in P-CSCF 115 for each access network. Accordingly, when the P-CSCF 115 is the source of the time zone information, i.e. the UCTZ 201, the P-CSCF 115 retrieves the UCTZ 201 from the configuration information of the P-CSCF 115.

Figure 8a depicts an embodiment wherein one fixed access network 161 is defined for the P-CSCF 115. The same fixed access network 161 is also defined for the P-CSCF 815. Thus, one fixed access network 161 can be defined for several P-CSCFs 115, 815. Accordingly the P-CSCFs 115, 815 are both preconfigured with the time zone information in Time zone 1 170, i.e the UCTZ 201 has a value corresponding to Time zone 1 170 for both P-CSCFs 115, 815.

Figure 8b depicts an alternative embodiment wherein one fixed access network 161 is defined for one P-CSCF 115. Accordingly the P-CSCF 115 is preconfigured with the time zone information in Time zone 1 170, i.e. the UCTZ 201 has a value corresponding to Time zone 1 170.

Figure 8c depicts an alternative embodiment wherein a first fixed access network 161 is defined for a first physical interface (Interface 1) 820 on the P-CSCF 115, and a second fixed access network 861 is defined for a second physical interface (Interface 2) 830 on the P-CSCF 115. Accordingly Interface 1 820 on the P-CSCF 115 is preconfigured with the time zone information in Time zone 1 170, i.e. the UCTZ 201 related to Interface 1 820 has a value corresponding to Time zone 1 170. Interface 2 830 on the P-CSCF 115 is preconfigured with the time zone information in Time zone 2 175, i.e. the UCTZ 201 related to Interface 2 830 has a value corresponding to Time zone 2 175.

Accordingly, when the P-CSCF 115 is the source of the time zone information, i.e. the UCTZ 201, the P-CSCF 115 retrieves either the UCTZ 201 related to Interface 1 820, or the UCTZ 201 related to Interface 2 830, depending on which of the interfaces 820 or 830 the UE 110 is connected through.

Figure 8d depicts an alternative embodiment wherein a first fixed access network 161 can be defined for a first logical interface VLAN 1, 850 on one physical interface 840 on the P-CSCF 115, and a second fixed access network 861 can be defined for a second logical interface VLAN 2, 860 on the same physical interface 840 on the P-CSCF 115. Accordingly VLAN 1 on the Interface 1 840 on the P-CSCF 115 is preconfigured with the time zone information in Time zone 1 170, i.e. the UCTZ 201 related to VLAN 1 850 has a value corresponding to Time zone 1 170. VLAN 2 860 on the Interface 1 840 on the P-CSCF 115 is preconfigured with the time zone information in Time zone 2 175, i.e. the UCTZ 201 related to VLAN 2 860 has a value corresponding to Time zone 2 175.

Accordingly, when the P-CSCF 115 is the source of the time zone information, i.e. the UCTZ 201, the P-CSCF 115 retrieves either the UCTZ 201 related to VLAN 1 850, or the UCTZ 201 related to VLAN 860, depending on which of the VLAN's 850 or 860 the UE 110 is connected through.

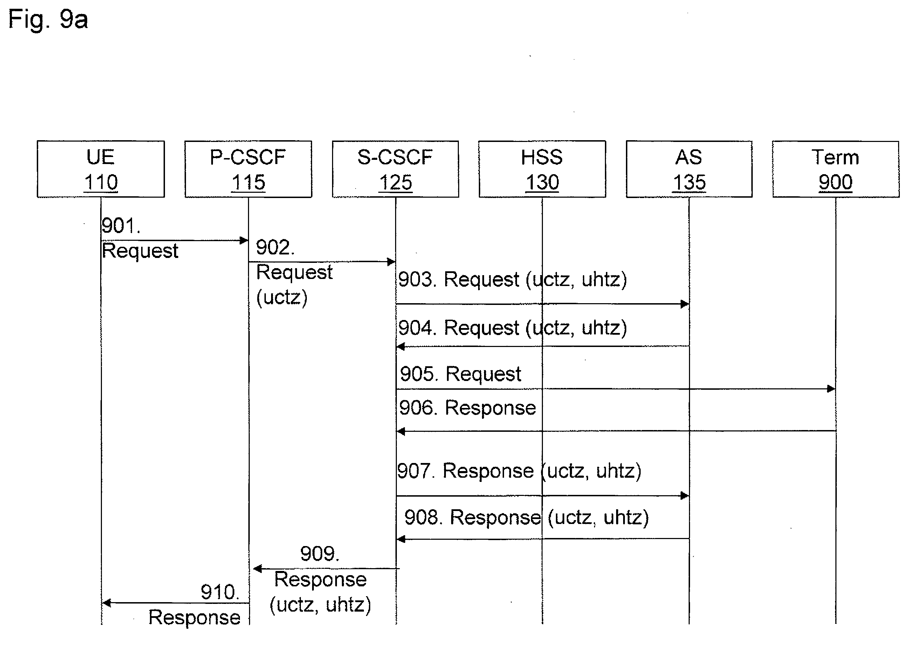

A procedure for handling time zone information in an IMS network 100, in connection with when the UE 110 sends an originating request, in accordance with an exemplary embodiment of the invention, will now be described with reference to the signaling diagram shown in Figure 9a.

It is assumed that the UE 110 has earlier registered with the IMS network 100, as described in connection with Fig. 2. Accordingly the involved IMS nodes has at least once stored and/or retrieved time zone information. The P-CSCF 115 may then receive and store an updated UCTZ 201 as soon as the UE 110 changes current time zone, as described in connection with Fig. 7a. Alternatively the S-CSCF 125 may then receive and store an updated UCTZ 201 as soon as the UE 110 changes time zone, as described in connection with Fig. 7b. The S-CSCF 125 may receive and store a UHTZ 202, as described in connection with Fig. 2.

Signals and steps indicated by reference numerals 901-910 respectively in Fig. 9a are now explained below.
901 The UE 110 sends an originating request message to the P-CSCF 115, The request message may relate to a session with an UE (not shown) at the terminating side.
902 The P-CSCF 115 includes, if known, the time zone information, UCTZ 201, and forwards the request message to the S-CSCF 125. The time zone information, UCTZ 201, is included in the PCV header 102, or in any suitable SIP header.

In the alternative embodiment when the P-CSCF 115 is the source of the UCTZ 201, the P-CSCF 115 automatically receives updates when the UCTZ 201 changes, which updates will be forwarded to the S-CSCF 125. Thus, in this case, an updated and accurate UCTZ 201 is known by the P-CSCF 115.

In the alternative embodiment when the HSS 130 is the source of the UCTZ 201, the HSS 130 will automatically receive updates, which updates are automatically forwarded to the S-CSCF 125. Thus, in this case, an updated and accurate UCTZ 201 will not be known by the P-CSCF 115.
903 If the S-CSCF 125 receives the UCTZ 201 from the P-CSCF 115, the S-CSCF 125 checks if it earlier has marked the P-CSCF 115 as the source of the UCTZ 201, and if it has, the S-CSCF 125 stores the received UCTZ 201. But if the S-CSCF 125 has earlier marked the HSS 130 as the source of the UCTZ 201, the UCTZ 201 received from the P-CSCF 115 is not stored. The S-CSCF 125 then forwards the request message to the AS 135 and includes the UCTZ 201 and the UHTZ 202 (if available). As explained above, the UCTZ 201 is either received from the P-CSCF 115 or from the HSS 130, depending on which of the P-CSCF 115 and the HSS 130 is the source of the UCTZ 201.
904 The AS 135 stores the received time zone information, UCTZ 201, UHTZ 202, possibly to be used when triggering services etc., and forwards the request message to the S-CSCF 125.
905 The S-CSCF 125 forwards the request message to the terminating side 900. The time zone information may be retained in the PCV header 102, when sent to the terminating side 900.
906 At reception of a response from the terminating side 900, the S-CSCF 125 removes any included time zone information from the received PCV header 102.
907 The S-CSCF 125 adds the stored time zone information UCTZ 201, UHTZ 202 to the PCV header 102 and forwards the response to the AS 135.
908 The AS 135 forwards the response to the S-CSCF 125 with the time zone information UCTZ 201, UHTZ 202 intact.
909 The S-CSCF 125 sends the response with the time zone information UCTZ 201, UHTZ 202 as-is to the P-CSCF 115.
910 The P-CSCF 115 stores the UHTZ 202 if received and possibly also the UCTZ 201 when the P-CSCF 115 is not the source of the information. The P-CSCF 115 removes the possible time zone information UCTZ 201, UHTZ 202 from the response before forwarding it to the UE 110.

Alternatively the response message is forwarded to the UE 110 with the time zone information included if such information is useful for the UE 110 depending on the application scenario. However, the normal case is that the PCV header 102 is not forwarded to the UE 110, therefore no time zone information is included in the response message illustrated in step 910 of Fig. 9a.

The described procedure enables the involved IMS network nodes, i.e. at least the P-CSCF 115, the S-CSCF 125, and the AS 135, to send charging information comprising time zone information related to the session. The described procedure also enables the AS 135 to use the time zone information when triggering services related to the session.

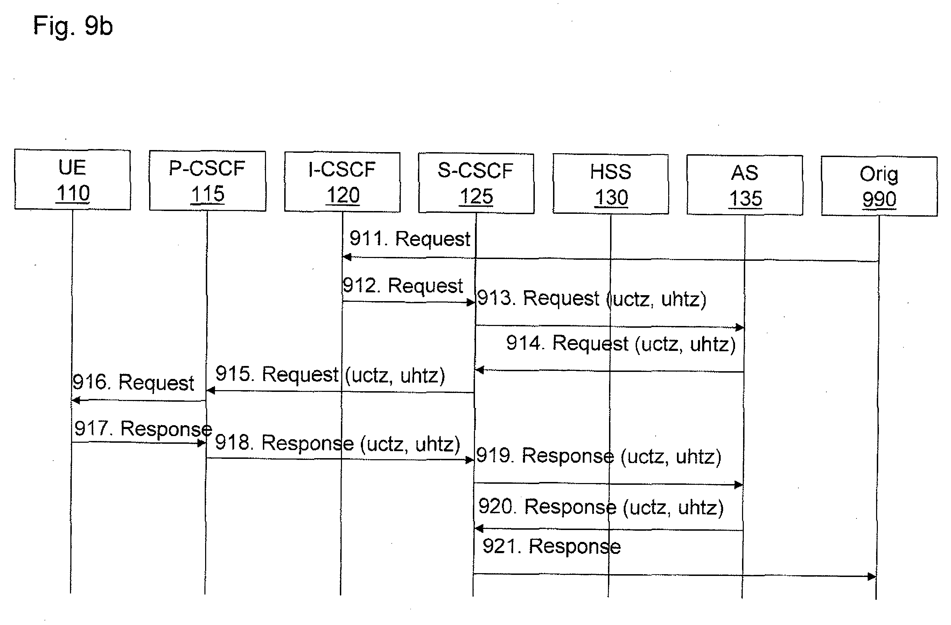

A procedure for handling time zone information in an IMS network 100, in connection with when the UE 110 receives a terminating request, in accordance with an exemplary embodiment of the invention, will now be described with reference to the signaling diagram shown in Figure 9b.

It is assumed that the UE 110 has earlier registered with the IMS network 100, as described in connection with Fig. 2. Accordingly the involved IMS nodes has at least once stored and/or retrieved time zone information. The P-CSCF 115 may then receive and store an updated UCTZ 201 as soon as the UE 110 changes current time zone, as described in connection with Fig. 7a. Alternatively the S-CSCF 125 may then receive and store an updated UCTZ 201 as soon as the UE 110 changes time zone, as described in connection with Fig. 7b. The S-CSCF 125 may receive and store a UHTZ 202, as described in connection with Fig. 2.

Signals and steps indicated by reference numerals 911-921 respectively in Fig. 9b are now explained below.
911 The originating side 990 sends a request message to the I-CSCF 120. The request message may be a request from an UE (not shown) at the originating side to establish a SIP session with the UE 110 on the terminating side.
912 The I-CSCF 120 removes any time zone information from the request message before it is forwarded to the S-CSCF 125. Alternatively the request message is forwarded to the S-CSCF 125 with the time zone information included if such information is useful for the terminating side. However, the normal case is that time zone information is not forwarded to the S-CSCF 125.
913 The S-CSCF 125 adds a possibly stored UCTZ 201 and a possibly stored UHTZ 202 to the PCV header 102 and forwards the request to the AS 135.
914 The AS 135 stores the received time zone information UCTZ 201, UHTZ 202, possibly to be used when triggering services etc., and forwards the request to the S-CSCF 125.
915 The S-CSCF 125 forwards the request to the P-CSCF 115 with the time zone information UCTZ 201, UHTZ 202 retained in the PCV header 102.
916 The P-CSCF 115 stores the UHTZ 202 if received and possibly also the UCTZ 201 when the P-CSCF 115 is not the source of the information. The P-CSCF 115 removes the possible time zone information UCTZ 201, UHTZ 202 from the request before forwarding it to the UE 110.

Alternatively the request message is forwarded to the UE 110 with the time zone information included if such information is useful for the UE 110 depending on the application scenario. However, the normal case is that the PCV header 102 is not forwarded to the UE 110, therefore no time zone information is included in the request message illustrated in step 916 of Fig. 9b.
917 The UE 110 sends a response.
918 The P-CSCF 115 includes available time zone information UCTZ 201, UHTZ 202 in the PCV header 102 before sending the response to the S-CSCF 125.
919 The S-CSCF 125 stores a possible UCTZ 201 if the P-CSCF 115 is marked as the source of the information and forwards the request to the AS 135.
920 The AS 135 stores the UCTZ 201 if received and sends the response to the S-CSCF 125 with the time zone information UCTZ 201, UHTZ 202 intact.
921 The S-CSCF 125 sends the response to the originating side 990. The time zone information UCTZ 201, UHTZ 202 may be retained in the PCV header 102 if sent to the originating side 990.

The described procedure enables the involved IMS network nodes, i.e. at least the P-CSCF 115, the S-CSCF 125, and the AS 135, to send charging information comprising time zone information related to the session. The described procedure also enables the AS 135 to use the time zone information when triggering services related to the session.

In order to be able to perform the steps of the embodiments described above the CSCF 115, 125 nodes and the HSS 130 node will need to be adapted for this purpose. The CSCF 115, 125 nodes will be adapted to be able to execute a method according to the flow chart shown in Figure 5. The HSS 130 node will be adapted to be able to execute a method according to the flow chart shown in Figure 6.

A method executed by a CSCF node 115, 125 for handling time zone information in an IMS network 100, in accordance with embodiments of the invention, will now be described with reference to the flow chart shown in Fig. 5.

In a step 501, the CSCF node 115, 125 receives a request message related to the UE 110. Step 502 illustrates that the CSCF node 115, 125 retrieves time zone information 201, 202, in response to reception of the request message. The time zone information 201, 202 specifies a time zone 170, 175 associated with the UE 110. As illustrated in step 503 the CSCF node 115, 125 stores the time zone information 201, 202 in a memory unit 350 of the CSCF node 115, 125. Step 504 illustrates that the CSCF node 115, 125 sends at least one message to at least one other IMS network node 115, 120, 125, 130, 135, to enable the at least one other IMS network node 115, 120, 125, 130, 135 to support time zone based services and/or charging associated with the UE 110.

It is not a requirement that all of the steps illustrated in Fig. 5 always are performed in the order illustrated in Fig. 5. In some cases, e.g. step 502 may be performed by retrieving the time zone information 201 from preconfigured information stored in a memory unit 350 of the CSCF 115, 125. In that case step 503 will have been performed prior to step 502 and probably also prior to step 501.

According to one embodiment the CSCF node 115, 125 creates, in step 505, an AVP 101 including the stored time zone information 201, 202, and sends, in step 506, a charging message including the AVP 101 to a charging node 145, to enable usage of the time zone information 201, 202 in charging.

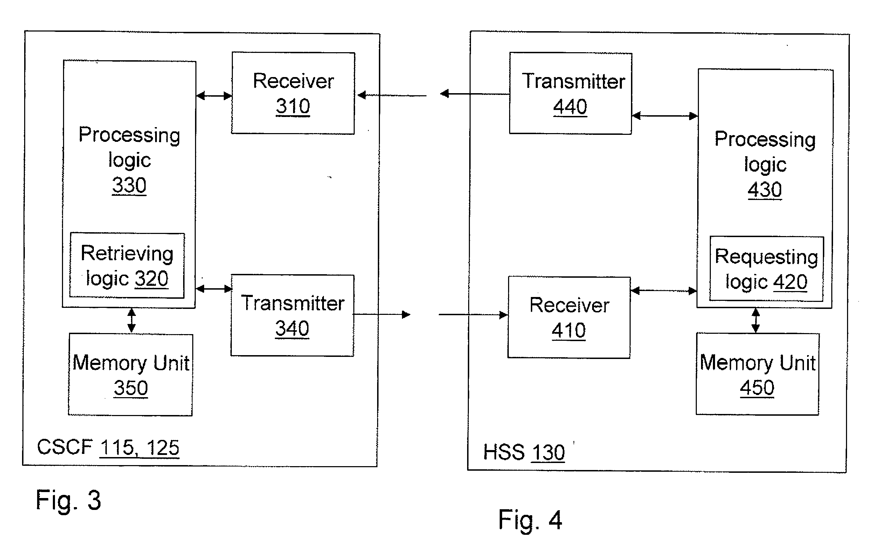

Figure 3 is a block diagram of exemplary components of the CSCF 115, 125 node adapted to execute the method described in connection with Figure 5 above. As illustrated, the CSCF 115, 125 comprises a receiver 310, a transmitter 340, processing logic 330, including retrieving logic 320 and a memory unit 350.

The receiver 310 may comprise circuitry that allows the CSCF 115, 125 to communicate with other nodes. In particular, receiver 310 is configured to receive a request message related to an UE 110, according to step 501, discussed above

The processing logic 330 may control the operation of the CSCF 115, 125. In particular, processing logic 330 is configured to, by the retrieving logic 320, retrieve time zone information 201, 202 in response to reception of a request message, according to step 502, discussed above.

The processing logic 330 is further configured to store the time zone information 201, 202 in the memory unit 350, according to step 503, discussed above.

The transmitter 340 may comprise circuitry that allows the CSCF 115, 125 to communicate with other nodes. In particular, the transmitter 340 is configured to send a message, including the time zone information 201, 202, according to step 504 discussed above.

Although Fig. 3 shows exemplary components of the CSCF 115, 125, in other implementations, the CSCF 115, 125 may contain fewer, different, or additional components than those described above. In still other implementations, one or more components of the CSCF 115, 125 may perform the tasks described as being performed by one or more other components of the CSCF 115, 125.

A method executed by an HSS node 130 for handling time zone information in an IMS network 100, in accordance with embodiments of the invention, will now be described with reference to the flow chart shown in Fig. 6.

It is not a requirement that all of the steps illustrated in Fig. 6 always are performed in the order illustrated in Fig. 6.

In a first step 601, the HSS node 130 receives a request message from an S-CSCF node 125. The request message is related to a registration of a UE 110 in the IMS network 100. Step 602 illustrates that the HSS node 130 requests time zone information 201 that specifies a time zone associated with the UE 110. The time zone information 201 is requested from a mobile packet core network 150 associated with a mobile access network 160 to which the UE 110 is connected. As illustrated in step 603 the HSS node 130 receives the requested time zone information 201. Step 604 illustrates that the HSS node 130 stores the time zone information 201 in a memory unit 450 of the HSS node 130. As illustrated in step 605 the HSS node 130 sends a response message to the S-CSCF node 125. The response message includes the time zone information 201 and enables the S-CSCF node 125 to support time zone based services and/or charging associated with the UE 110.

Figure 4 is a block diagram of exemplary components of the HSS 130 node adapted to execute the method described in connection with Figure 6 above. As illustrated, the HSS 130 comprises a receiver 410, a transmitter 440, processing logic 430, including requesting logic 420 and a memory unit 450.

The receiver 410 may comprise circuitry that allows the HSS 130 to communicate with other nodes. In particular, the receiver 410 is configured to receive, a request message related to a registration of an UE 110 in the IMS network 100, according to step 601, described above.

The processing logic 430 may control the operation of the HSS 130. In particular, the processing logic 430 is configured to, by the requesting logic 420, request time zone information 201 that specifies a time zone 170 associated with the UE, according to step 602 described above. The receiver 410 is further configured to receive the requested time zone information 201, according to step 603, described above.

The processing logic 430 is further configured to store the time zone information 201 in the memory unit 450 of the HSS 130 node, according to step 604, described above.

The transmitter 440 may comprise circuitry that allows the HSS 130 to communicate with other nodes. In particular, the transmitter 440 is configured to send a response message, including the time zone information 201, 202, according to step 605, described above.

Although Fig. 4 shows exemplary components of the HSS 130, in other implementations, the HSS 130 may contain fewer, different, or additional components than those described above. In still other implementations, one or more components of the HSS 130 may perform the tasks described as being performed by one or more other components of the HSS 130.

It has been discussed above that the time zone information can be included in the charging information by all IMS nodes, capable of charging, that have received and stored the time zone information sent in the SIP signaling. The time zone information may be included in an AVP, which is created by the IMS node capable of charging. The AVP is included in a charging message sent to the charging node 145.

When the served user's time zone is to be used for charging, the information needs to be added to a charging interface, such as the interface between the IMS nodes 115, 120, 125, 135 and the charging node 145 in Fig. 1, for example in the following format:
[User-Time-Zone]
[Current-TZ]
[Home-TZ]

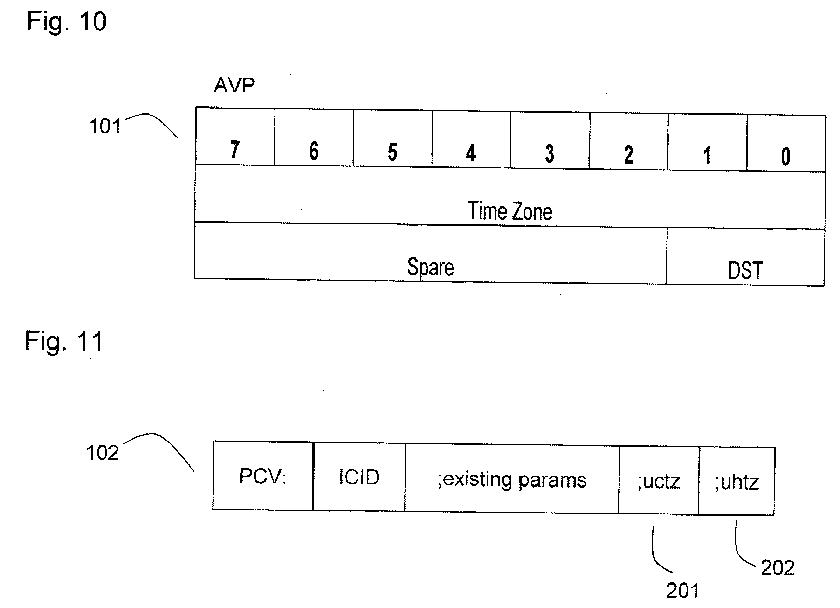

The Current-TZ and Home-TZ AVPs may use the same format as "3GPP-MS-Time Zone" defined in 3GPP TS 29.061 not to cause unnecessary reformatting. This gives an Octetstring indicating the offset between universal time and local time, in steps of 15 minutes, of where the UE 110 currently resides. A possible layout for the AVP 101 is shown in Fig 10

The "Time Zone" field of the AVP uses the same format as the "Time Zone" field used in the Transfer Layer Protocol (TP)-Service-Centre-Time-Stamp, which is defined in 3GPP TS 23.040:
"The Time Zone indicates the difference, expressed in quarters of an hour, between the local time and GMT. In the first of the two semi octets, the first bit (bit 3 of the seventh octet of the TP Service Centre Time Stamp field) represents the algebraic sign of this difference (0: positive, 1: negative)."

The "Daylight-Saving-Time" field of the AVP uses the same format as the "Daylight Saving Time" IE defined in 3GPP TS 24.008, as illustrated in Table 1.

**Table 1 Possible values for the "Daylight Saving Time" field**

| **Bit 1** | **Bit 0** | |
|---|---|---|
| 0 | 0 | No adjustment for Daylight Saving Time |
| 0 | 1 | +1 hour adjustment for Daylight Saving Time |
| 1 | 0 | +2 hours adjustment for Daylight Saving Time |
| 1 | 1 | Reserved |

It has been discussed above that the time zone information is added to signaling between IMS nodes, e.g. in an appropriate SIP signaling header, and spread to all nodes involved. The PCV header has been suggested as a possible carrier of the time zone information although any suitable SIP signaling header may be used. Figure 11 shows a PCV header 102 populated with time zone information, UCTZ 201 and UHTZ 202, according to one embodiment.

The Internet Engineering Task Force (IETF) document RFC3455 defines PCV as:

| | |
|---|---|
| P-Charging-Vector | = "P-Charging-Vector" HCOLON icid-value *(SEMI charge-params) |
| charge-params | = icid-gen-addr / orig-ioi / term-ioi / generic-param |
| icid-value | = "icid-value" EQUAL gen-value |
| icid-gen-addr | = "icid-generated-at" EQUAL host |
| orig-ioi | = "orig-ioi" EQUAL gen-value |
| term-ioi | = "term-ioi" EQUAL gen-value |

It is suggested that the time zone information comes in as "generic-param". The time zone information could be sent in the following format:

```
 timezone = home-tz / current-tz / (home-tz SEMI current-tz)
 home-tz = "home-timezone" EQUAL tz-value COMMA dst
 current-tz = "current-timezone" EQUAL tz-value COMMA dst
 tz-info = 2HEXDIG
 dst= "daylight-saving-time" EQUAL dst-value
 dst-value= no-adjustment-for-dst / plus-1-hour-adjustment-for-dst /
            plus-2-hour-adjustment-for-dst / reserved
              no-adjustment-for-dst= "0"
              pius-1-hour-adjustment-for-dst= "1"
              plus-2-hour-adjustment-for-dst= "2"
              reserved= "3"
```

The present invention may of course, be carried out in other specific ways than those herein set forth without departing from the essential characteristics of the invention. The present embodiments are, therefore, to be considered in all respects as illustrative and not restrictive and all changes coming within the meaning and equivalency range of the appended claims are intended to be embraced therein.

## Claims

1. A method, performed by a proxy call session control function, P-CSCF, node (115), for handling time zone information (201, 202) in an internet protocol multimedia subsystem, IMS, network (100), the method comprising:
receiving (501) a request message related to a user equipment, UE (110);
retrieving (502) time zone information (201, 202) in response to reception of said request message, wherein said time zone information (201, 202) specifies a time zone (170, 175) associated with the UE (110);
storing (503) the time zone information (201, 202) in a memory unit (350) of the P-CSCF node (115); and,
sending (504) at least one message, including the time zone information (201, 202), to at least one other IMS network node (115, 120, 125, 130, 135), to enable said at least one other IMS network node (115, 120, 125, 130, 135) to support time zone based services and/or charging associated with the UE (110), wherein the UE (110) is connected to a mobile access network (160), and the time zone information (201) is retrieved (502) from a policy control and charging rules function, PCRF, node (140), which stores time zone information (201) received from the mobile access network (160) to which the UE (110) is connected.

2. The method according to claim 1, wherein
the time zone information comprises User Current Time Zone information (201) that specifies the time zone (170) of a currently visited network (160) of the UE (110).

3. The method according to claim 1 or 2, wherein
the time zone information comprises User Home Time Zone information (202) that specifies a home time zone (175) of a user subscription associated with the UE (110).

4. The method according to claim 1, further comprising:
receiving (708) updated time zone information (201) from the PCRF node (140), when the time zone information (201), which is stored in the PCRF node (140) and associated with the UE (110), has changed.

5. The method according to claim 1 or 2, wherein
the UE (110) is connected to a fixed access network (161, 861), and
the time zone information (201) of the fixed access network (161, 861) is preconfigured into the P-CSCF node (115, 815), such that the step of retrieving includes retrieving the time zone information (201) from configuration information of the P-CSCF node (115, 815).

6. The method according to any of the preceding claims, wherein
the time zone information (201, 202) is included in a p-charging-vector header (102) field of the received (501) request message and/or sent (504) message.

7. The method according to any of the preceding claims,
further comprising:
creating (505) an Attribute Value Pair, AVP, (101) including the stored time zone information (201, 202),
sending (506) a charging message including said AVP (101) to a charging node (145), to enable usage of the time zone information (201, 202) in charging.

8. A proxy call session control function, P-CSCF, node (115) for handling time zone information (201, 202) in an internet protocol multimedia subsystem, IMS, network (100), the P-CSCF node (115) comprising:
a receiver (310), a transmitter (340), a memory unit (350) and processing logic (330), the processing logic (330) being connected to the receiver (310), to the transmitter (340) and to the memory unit (350), wherein
the receiver (310) is configured to receive (501) a request message related to a user equipment, UE, (110);
the processing logic (330) comprises retrieving logic (320) configured to retrieve (502) time zone information (201, 202) in response to reception of said request message, wherein said time zone information (201, 202) specifies a time zone (170, 175) associated with the UE (110);
the processing logic (330) is further configured to store (503) the time zone information (201, 202) in the memory unit (350) of the CSCF node (115, 125); and
the transmitter (340) is configured to send (504) at least one message, including the time zone information (201, 202), to at least one other IMS network node (115, 120, 125, 130, 135), to enable said at least one other IMS network node (115, 120, 125, 130, 135) to support time zone based services and/or charging associated with the UE (110), wherein the UE (110) is connected to a mobile access network (160), and the time zone information (201) is retrieved (502) from a policy control and charging rules function, PCRF, node (140), which stores time zone information (201) received from the mobile access network (160) to which the UE (110) is connected.

9. A P-CSCF node (115) according to claim 8, wherein
the processing logic (330) is further configured to create (505) an Attribute Value Pair, AVP, (101) including the stored time zone information (201, 202); and
the transmitter (340) is further configured to send (506) a charging message including said AVP (101) to a charging node (145), to enable usage of the time zone information (201, 202) in charging.

## Patentansprüche

1. Verfahren, das durch einen Proxy-Rufsitzungssteuerungsprotokoll, P-CSCF,-Knoten (115) durchgeführt wird, zur Handhabung von Zeitzoneninformationen (201, 202) in einem Internetprotokoll-Multimedia-Subsystem, IMS,-Netzwerk (100), wobei das Verfahren umfasst:
Empfangen (501) einer Anforderungsnachricht in Bezug auf eine Benutzereinrichtung, UE (110);
Abrufen (502) von Zeitzoneninformationen (201, 202) als Reaktion auf den Empfang der Anforderungsnachricht, wobei die Zeitzoneninformationen (201, 202) eine Zeitzone (170, 175) spezifizieren, die mit der UE (110) assoziiert ist;
Speichern (503) der Zeitzoneninformationen (201, 202) in einer Speichereinheit (350) des P-CSCF-Knotens (115); und
Senden (504) mindestens einer Nachricht, welche die Zeitzoneninformationen (201, 202) umfasst, an mindestens einen anderen IMS-Netzknoten (115, 120, 125, 130, 135), um den mindestens einen anderen IMS-Netzknoten (115, 120, 125, 130, 135) zu befähigen, zeitzonenbasierte Dienste und/oder Vergebührung zu unterstützen, die mit der UE (110) assoziiert sind, wobei die UE (110) an ein Mobilanschlussnetzwerk (160) angeschlossen ist, und die Zeitzoneninformationen (201) von einem Richtlinienüberwachungs- und Vergebührungsregelfunktions, PCRF,-Knoten (140) abgerufen werden (502), welcher Zeitzoneninformationen (201) speichert, die vom Mobilanschlussnetzwerk (160) empfangen werden, an das die UE (110) angeschlossen ist.

2. Verfahren nach Anspruch 1, wobei
die Zeitzoneninformationen aktuelle Benutzer-Zeitzoneninformationen (201) umfassen, welche die Zeitzone (170) eines von der UE (110) gerade besuchten Netzwerks (160) spezifizieren.

3. Verfahren nach Anspruch 1 oder 2, wobei
die Zeitzoneninformationen Benutzer-Heimatzeitzoneninformationen (202) umfassen, welche eine Heimatzeitzone (175) einer mit der UE (110) assoziierten Benutzersubskription spezifizieren.

4. Verfahren nach Anspruch 1, ferner umfassend:
Empfangen (708) von aktualisierten Zeitzoneninformationen (201) vom PCRF-Knoten (140), wenn sich die Zeitzoneninformationen (201), die im PCRF-Knoten (140) gespeichert und mit der UE (110) assoziiert sind, geändert haben.

5. Verfahren nach Anspruch 1 oder 2, wobei
die UE (110) an ein Festanschlussnetzwerk (161, 861) angeschlossen ist, und
die Zeitzoneninformationen (201) des Festanschlussnetzwerks (161, 861) in den P-CSCF-Knoten (115, 815) vorkonfiguriert sind, derart dass der Schritt des Abrufens ein Abrufen der Zeitzoneninformationen (201) aus Konfigurationsinformationen des P-CSCF-Knotens (115, 815) umfasst.

6. Verfahren nach einem der vorhergehenden Ansprüche, wobei
die Zeitzoneninformationen (201, 202) in einem p-Vergebührungsvektorkopf (102)-Feld der empfangenen (501) Anforderungsnachricht und/oder der gesendeten (504) Nachricht enthalten sind.

7. Verfahren nach einem der vorhergehenden Ansprüche, ferner umfassend:
Erzeugen (505) eines Attributwertepaares, AVP, (101), das die gespeicherten Zeitzoneninformationen (201, 202) umfasst,
Senden (506) einer Vergebührungsnachricht, die das AVP (101) umfasst, an einen Vergebührungsknoten (145), um die Nutzung der Zeitzoneninformationen (201, 202) bei der Vergebührung zu ermöglichen.

8. Proxy-Rufsitzungssteuerungsprotokoll, P-CSCF,-Knoten (115) zum Handhaben von Zeitzoneninformationen (201, 202) in einem Internetprotokoll-Multimedia-Subsystem, IMS,-Netzwerk (100),
wobei der P-CSCF-Knoten (115) umfasst:
einen Empfänger (310), einen Sender (340), eine Speichereinheit (350) und Verarbeitungslogik (330), wobei die Verarbeitungslogik (330) mit dem Empfänger (310), mit dem Sender (340) und mit der Speichereinheit (350) verbunden ist, wobei
der Empfänger (310) so konfiguriert ist, dass er eine Anforderungsnachricht in Bezug auf eine Benutzereinrichtung, UE, (110) empfängt (501);
die Verarbeitungslogik (330) Abruflogik (320) umfasst, die so konfiguriert ist, dass sie als Reaktion auf den Empfang der Anforderungsnachricht Zeitzoneninformationen (201, 202) abruft (502), wobei die Zeitzoneninformationen (201, 202) eine Zeitzone (170, 175) spezifizieren, die mit der UE (110) assoziiert ist;
die Verarbeitungslogik (330) ferner so konfiguriert ist, dass sie die Zeitzoneninformationen (201, 202) in der Speichereinheit (350) des CSCF-Knotens (115, 125) speichert (503); und
der Sender (340) so konfiguriert ist, dass er mindestens eine Nachricht, welche die Zeitzoneninformationen (201, 202) umfasst, an mindestens einen anderen IMS-Netzknoten (115, 120, 125, 130, 135) sendet (504), um den mindestens einen anderen IMS-Netzknoten (115, 120, 125, 130, 135) zu befähigen, zeitzonenbasierte Dienste und/oder Vergebührung zu unterstützen, die mit der UE (110) assoziiert sind, wobei die UE (110) an ein Mobilanschlussnetzwerk (160) angeschlossen ist, und die Zeitzoneninformationen (201) von einem Richtlinienüberwachungs- und Vergebührungsregelfunktions, PCRF,-Knoten (140) abgerufen werden (502), welcher Zeitzoneninformationen (201) speichert, die vom Mobilanschlussnetzwerk (160) empfangen werden, an das die UE (110) angeschlossen ist.

9. P-CSCF-Knoten (115) nach Anspruch 8, wobei
die Verarbeitungslogik (330) ferner so konfiguriert ist, dass sie ein Attributwertepaar, AVP, (101) erzeugt (505), das die gespeicherten Zeitzoneninformationen (201, 202) umfasst; und der Sender (340) ferner so konfiguriert ist, dass er eine Vergebührungsnachricht, die das AVP (101) umfasst, an einen Vergebührungsknoten (145) sendet (506), um die Nutzung der Zeitzoneninformationen (201, 202) bei der Vergebührung zu ermöglichen.

## Revendications

1. Procédé, effectué par un noeud P-CSCF, proxy call session control function, (115) pour gérer une information de fuseau horaire (201, 202) dans un réseau IMS, sous-système multimédia à protocole Internet, (100), le procédé comprenant de :
recevoir (501) un message de demande relatif à un équipement d'utilisateur, UE (110) ;
extraire (502) l'information de fuseau horaire (201, 202), en réponse à la réception dudit message de demande, dans lequel ladite information de fuseau horaire (201, 202) spécifie un fuseau horaire (170, 175) associé à l'UE (110) ;
mémoriser (503) l'information de fuseau horaire (201, 202) dans une unité de mémoire (350) du noeud P-CSCF (115) ; et
envoyer (504) au moins un message, incluant l'information de fuseau horaire (201, 202) à au moins un autre noeud de réseau IMS (115, 120, 125, 130, 135), pour permettre à au moins un autre noeud de réseau IMS (115, 120, 125, 130, 135) de prendre en charge des services basés sur fuseau horaire et/ou une facturation associée à l'UE (110), dans lequel l'UE (110) est connecté à un réseau d'accès mobile (160), et l'information de fuseau horaire (201) est extraite (502) d'un noeud de fonction de commande de politique et règles de facturation, PCRF, (140), qui mémorise une information de fuseau horaire (201) reçue depuis le réseau d'accès mobile (160) auquel l'UE (110) est connecté.

2. Procédé selon la revendication 1, dans lequel l'information de fuseau horaire comprend une information de fuseau horaire d'utilisateur actuel (201) qui spécifie le fuseau horaire (170) d'un réseau actuellement visité (160) de l'UE (110).

3. Procédé selon les revendications 1 ou 2, dans lequel
l'information de fuseau horaire comprend une information de fuseau horaire de rattachement d'utilisateur (202) qui spécifie un fuseau horaire de rattachement (175) d'un abonnement d'utilisateur associé à l'UE (110).

4. Procédé selon la revendication 1, comprenant en outre de :
recevoir (708) une information de fuseau horaire mise à jour (201) provenant du noeud PCRF (140), quand l'information de fuseau horaire (201), qui est mémorisée dans le noeud PCRF (140) et associée à l'UE (110) a changé.

5. Procédé selon les revendications 1 ou 2, dans lequel :
l'UE (110) est connecté à un réseau d'accès fixe (161, 861),
et l'information de fuseau horaire (201) du réseau d'accès fixe (161, 861) est préconfigurée dans le noeud P-CSCF (115, 815), de sorte que l'étape d'extraction inclut d'extraire l'information de fuseau horaire (201) de l'information de configuration du noeud P-CSCF (115, 815).

6. Procédé selon une quelconque des revendications précédentes, dans lequel
l'information de fuseau horaire (201, 202) est incluse dans un champ d'en-tête de vecteur de facturation p (102) du message de demande reçu (501) et/ou du message envoyé (504).

7. Procédé selon une quelconque des revendications précédentes, comprenant en outre de :
créer (505) une paire de valeur d'attribut, AVP, (101) incluant l'information de fuseau horaire mémorisée (201, 202),
envoyer (506) un message de facturation incluant ledit AVP (101) vers un noeud de facturation (145) pour permettre l'utilisation de l'information de fuseau horaire (201, 202) lors de la facturation.

8. Noeud P-CSCF, proxy call session control function, (115) pour gérer l'information de fuseau horaire (201, 202) dans un réseau de sous-système multimédia de protocole Internet, IMS, (100),
le noeud P-CSCF (115) comprenant :
un récepteur (310), un émetteur (340), une unité de mémoire (350) et une logique de traitement (330), la logique de traitement (330) étant connectée au récepteur (310), à l'émetteur (340) et à l'unité de mémoire (350), dans lequel
le récepteur (310) est configuré pour recevoir (501) un message de demande relatif à un équipement d'utilisateur, UE, (110) ;
la logique de traitement (330) comprend une logique d'extraction (320) configurée pour extraire (502) une information de fuseau horaire (201, 202) en réponse à la réception dudit message de demande, dans lequel ladite information de fuseau horaire (201, 202) spécifie un fuseau horaire (170, 175) associé à l'UE (110) ;
la logique de traitement (330) est en outre configurée afin de mémoriser (503) l'information de fuseau horaire (201, 202) dans l'unité de mémoire (350) du noeud CSCF (115, 125) ; et
l'émetteur (340) est configuré afin d'envoyer (504) au moins un message, incluant l'information de fuseau horaire (201, 202), vers au moins un autre noeud de réseau IMS (115, 120, 125, 130, 135), pour permettre audit au moins un autre noeud de réseau IMS (115, 120, 125, 130, 135) pour prendre en charge des services basés sur fuseau horaire et/ou une facturation associée à l'UE (110), dans lequel l'UE (110) est connecté à un réseau d'accès mobile (160), et l'information de fuseau horaire (201) est extraite (502) d'un noeud de fonction de commande de politique et règles de facturation, PCRF, (140), qui mémorise une information de fuseau horaire (201) reçue depuis le réseau d'accès mobile (160) auquel l'UE (110) est connecté.

9. Noeud P-CSCF (115) selon la revendication 8, dans lequel
la logique de traitement (330) est en outre configurée afin de créer (505) une paire de valeur d'attribut, AVP, (101) incluant l'information de fuseau horaire mémorisée (201, 202) ; et
l'émetteur (340) est en outre configuré afin d'envoyer (506) un message de facturation incluant ladite AVP (101) à un noeud de facturation (145), pour permettre l'utilisation de l'information de fuseau horaire (201, 202) lors de la facturation.
